(19) Europäisches Patentamt / European Patent Office / Office européen des brevets

(11) **EP 4 049 197 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **21722757.8**

(22) Anmeldetag: **12.04.2021**

(51) Internationale Patentklassifikation (IPC):
**G06N 10/20** (2022.01)    **G06N 10/60** (2022.01)

(52) Gemeinsame Patentklassifikation (CPC):
**G06N 10/20; G06N 10/60**

(86) Internationale Anmeldenummer:
**PCT/DE2021/100332**

(87) Internationale Veröffentlichungsnummer:
**WO 2021/244694 (09.12.2021 Gazette 2021/49)**

(54) **VERFAHREN ZUR SIMULATION EINES REALEN INSBESONDERE VERRAUSCHTEN SPIN SYSTEMS MITTELS EINES QUANTENCOMPUTERS**

METHOD FOR SIMULATING A REAL SPIN SYSTEM, MORE PARTICULARLY A NOISY SPIN SYSTEM, BY MEANS OF A QUANTUM COMPUTER

PROCÉDÉ POUR SIMULER UN SYSTÈME DE SPINS RÉEL, EN PARTICULIER UN SYSTÈME DE SPINS BRUITÉ, AU MOYEN D'UN ORDINATEUR QUANTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2020 DE 102020114575**

(43) Veröffentlichungstag der Anmeldung:
**31.08.2022 Patentblatt 2022/35**

(73) Patentinhaber: **HQS Quantum Simulations GmbH 76131 Karlsruhe (DE)**

(72) Erfinder:
• **MARTHALER, Michael 76137 Karlsruhe (DE)**
• **ZANKER, Sebastian 76227 Karlsruhe (DE)**
• **FRATUS, Keith 76137 Karlsruhe (DE)**

(74) Vertreter: **Christ, Niko Geitz Patentanwälte PartG mbB Obere Wässere 3-7 72764 Reutlingen (DE)**

(56) Entgegenhaltungen:
• **KIM K. ET AL: "Quantum simulation of frustrated Ising spins with trapped ions", NATURE, vol. 465, no. 7298, 3 June 2010 (2010-06-03), London, pages 590 - 593, XP055823965, ISSN: 0028-0836, Retrieved from the Internet <URL:https://www.nature.com/articles/nature09071.pdf> [retrieved on 20210713], DOI: 10.1038/nature09071**
• **SCHINDLER P. ET AL: "Quantum simulation of dynamical maps with trapped ions", NATURE PHYSICS, vol. 9, no. 6, 19 May 2013 (2013-05-19), GB, pages 361 - 367, XP055823957, ISSN: 1745-2473, Retrieved from the Internet <URL:https://www.nature.com/articles/nphys2630.pdf> [retrieved on 20210713], DOI: 10.1038/nphys2630**
• **TSENG C. H. ET AL: "Quantum simulation with natural decoherence", PHYSICAL REVIEW A (ATOMIC, MOLECULAR, AND OPTICAL PHYSICS), vol. 62, no. 3, 1 August 2000 (2000-08-01), USA, XP055823953, ISSN: 1050-2947, Retrieved from the Internet <URL:https://journals.aps.org/pra/pdf/10.1103/PhysRevA.62.032309?casa_token=OmEM1yeEE44AAAAA:coDhHGcGX-NJ4IrvYv6DApjwK-Y5q9gg_0-gug z2AQriNoMp-OrO5mXgGQ77HHdWk5T4FgP_vyy dew> [retrieved on 20210713], DOI: 10.1103/PhysRevA.62.032309**

EP 4 049 197 B1

# EP 4 049 197 B1

**Beschreibung**

Die Erfindung betrifft ein Verfahren zur Simulation eines realen, insbesondere verrauschten Spin-Systems unter Einsatz eines Quantencomputers, wobei ein reales, insbesondere verrauschtes Spin-System auf ein abstraktes Quanten-Spin-System und wenigstens ein zu bestimmender physikalischer Parameter auf das abstrakte Quanten-Spin-System abgebildet wird.

Beispielsweise offenbart die nachveröffentlichte deutsche Patentanmeldung DE 10 2019 109 816 A1 ein Verfahren zur Modellierung eines Systems unter Zuhilfenahme eines Quantencomputers. Das Verfahren zeichnet sich dadurch aus, dass das zu motivierende System in einem Bad-Teil niedriger Relevanz und einen Cluster-Teil hoher Relevanz unterteilt wird, wobei die niederperformanten Qubits einer groben Beschreibung des Bad-Teils und die hochperformanten Qubits einer exakten Beschreibung des Cluster-Teils zugewiesen werden.

Weiterhin offenbart die nachveröffentliche Patentanmeldung US 2020/0320240 A1 ein Verfahren zur Optimierung der Schaltungsparameter von variablen Quantenalgorithmen für den praktischen Einsatz von Quantencomputer-Algorithmen in naher Zukunft. Das Verfahren zeichnet sich dadurch aus, dass in einer ersten Stufe analytische Tomographieanpassungen für ein lokales Cluster von Schaltungsparametern durch Abtastung der beobachtbaren Zielfunktion am Quadraturpunkt in den Schaltungsparametern durchgeführt werden. Die Optimierung kann verwendet werden, um die optimalen Schaltungsparameter eingefroren zu bestimmen. In einer zweiten Stufe werden dann verschiedene Cluster von Schaltungsparametern in "Jacobi-Sweeps" optimiert, was zu einem monoton deckenden Festpunktverfahren führt. In einer dritten Stufe kann die Iterationsgeschichte des Festpunkt-Jacobi-Verfahrens genutzt werden, um die Konvergenz durch Anwendung der Anderson-Beschleunigung oder der direkten Inversion des iterativen Unterraums (DIIS) von Pulay zu beschleunigen.

Der Übersichtsartikel von Georgescu et al. (Georgescu, Iulia M., Sahel Ashhab, and Franco Nori. "Quantum simulation." Reviews of Modern Physics 86.1 (2014): 153.) zeigt unterschiedliche Herangehensweisen zur Simulation von quantenmechanischen Systemen, insbesondere der Quantensimulation mit Quantencomputern, sowie die wichtigsten theoretischen und experimentellen Aspekte solcher Quantensimulationen.

Ferner ist aus der Veröffentlichung von Kim et al. (Kim, Kihwan, et al. "Quantum simulation of frustrated Ising spins with trapped ions." Nature 465.7298 (2010): 590-593) ein Verfahren zur Simulation von frustrierten Ising-Spins mit gefangenen atomaren Ionen vorbekannt.

Das Funktionsprinzip eines Quantencomputers ist als theoretisches Konzept bereits seit langer Zeit bekannt und wird bereits seit einiger Zeit auch praktisch umgesetzt. Während in üblichen Digitalrechnern Informationen in Bits dargestellt werden, welche prinzipiell Schalter in einer Ein- oder in einer Aus-Stellung darstellen, wird die ebenfalls prinzipiell binäre Information im Quantenrechner durch quantenmechanische Zustände repräsentiert. Dies können üblicherweise der Spin eines Elektrons, Energieniveaus von Atomen oder die Stromrichtung, die Ladung oder der magnetische Fluss in einem Supraleiter sein. Unabhängig von der Wahl der physikalischen Implementierung wird ein solches quantenmechanisches Zweizustandssystem als Qubit bezeichnet.

Meist wird die Ein- oder Aus-Stellung eines Qubits in Form eines "Spin-Up" oder "Spin-Down" beschrieben, da die möglichen Konfigurationen und/oder Dynamiken eines Qubits vergleichbar zu denen eines "Spins", insbesondere in Form eines Elektronspins oder Kernspins, sind. Charakteristisch für solch ein Qubit ist daher, dass ein Qubit in einer beliebigen Kombination dieser beiden Zustände "Spin-Up" und "Spin-Down" vorliegen kann. Somit besteht ein Quantencomputer aus mehreren interagierenden Qubits, die mathematisch betrachtet, äquivalent zu vielen interagierenden "Spins" sind.

Wird diese Interaktion der Qubits in Form eines Spektrums betrachtet, so beinhaltet dieses Spektrum Absorptions- und Emissions-Peaks, welche zentriert innerhalb der Frequenz liegen, in welcher das System Energie absorbiert oder imitiert. Im Idealfall würde dies also zu scharfen Peaks innerhalb des Spektrums führen.

Allerdings sind Qubits sehr empfindlich gegenüber Fehlern. Insbesondere werden solche durch die Kopplung der Qubits an externe Freiheitsgrade verursacht. Dies wird oft als Dekoheränz bezeichnet. Diese Dekoheränz - die maßgeblich durch die Dekoheränzrate $\gamma_{dek}$ beschrieben wird und die Akkumulation der Fehler im Quantencomputer widerspiegelt - führt innerhalb eines Spektrums zu einer Verbreiterung der Absorptions- und Emissions-Peaks.

Solche verbreiterten Peaks, auch als verrauschte Peaks bekannt, treten auch bei weiteren realen Spin-Systemen, insbesondere bei der Kernspinresonanzspektroskopie (NMR) auf, bei welcher der Kernspin eines Atoms untersucht wird. Auch hier sind die Spins der Kerne der zu untersuchenden Atome von externen Einflüssen abhängig, wodurch ebenfalls Dekohärenz entsteht. Daher ist die Verbreiterung der Peaks eines realen Spin-Systems mit der durch die Dekohärenz verbreiterten Peaks eines Qubit-Systems mathematisch vergleichbar. Weitere Beispiele für reale Spin-Systeme auf die dies zutrifft sind unter anderem die Elektronenspinresonanzspektroskopie (ESR) oder Spintroniksysteme.

Der Quantenzustand eines idealen Spin-Systems wird zumeist über eine Wellenfunktion $|\psi\rangle$ beschrieben, welche eine Vektormatrix von 2N komplexen zahlen ist, mit N als Anzahl der Spins.

Die zeitliche Entwicklung dieses Zustandes wird durch die Schrödinger-Gleichung bestimmt, wobei diese den Hamilton-Operator *H* des Systems in Form von

$$\frac{\partial}{\partial t}|\psi\rangle = -iH|\psi\rangle$$

beinhaltet. Der Hamilton-Operator *H* ist dabei ein auf die Wellenfunktionen $|\psi\rangle$ agierender Matrix-Operator, sodass im Idealfall, ein lineares System von $2^N$ gekoppelten Differenzialgleichungen zu lösen ist.

Im Gegensatz zum Idealsystem, kann der Zustand eines verrauschten Systems nicht durch solch eine Wellenfunktion beschrieben werden. Vielmehr fordert der Verlust der Quantenkohärenz eine Beschreibung mit einer Dichtematrix, die in Form einer $2^N \times 2^N$-Matrix dargestellt werden kann.

Eine vergleichbare lineare Gleichung der zeitlichen Entwicklung eines solchen Systems kann insbesondere mittels

$$\frac{\partial}{\partial t}\rho = \mathrm{L}\left(\rho\right)$$

beschrieben werden, wobei der "Liouville-Superoperator" ein Operator ist, der auf Matrizen wirkt. Die gängigste Form des "Liouville-Superoperators" kann als die "Lindblad-Gleichung" wie folgt geschrieben werden:

$$\frac{\partial}{\partial t}\rho = -\frac{i}{\hbar}[H,\rho] + \sum_i \gamma_i \left(L_i \rho L_i^t - \frac{1}{2}\{L_i^t|L_i\rho\}\right)$$

wobei *H* ein Hamilton-Operator ist, $\gamma_i$ die Raten beschreibt, bei denen bestimmte Relaxationsprozesse auftreten, und $L_i$ sogenannte Kopplungsoperatoren sind, die Details der Relaxationsprozesse bzw. Details der Kopplung der Qubits an die externen Freiheitsgrade beschreiben. Die Kopplungsoperatoren der Qubits werden auch reale Kopplungsoperatoren genannt. Der durch die Kopplungsoperatoren definierte Superoperator wird auch Lindblad-Superoperator genannt. Bei Spin-Systemen und dementsprechend auch Qubits sind die Kopplungsoperatoren üblicherweise gegeben durch die Pauli-Operatoren $\sigma_x, \sigma_y, \sigma_z$, welche jeweils nur auf einen Spin bzw. ein Qubit wirken. Insbesondere sind auch Kopplungsoperatoren möglich, die auf mehr als einen Spin bzw. ein Qubit wirken und welche durch ein Produkt an Pauli-Operatoren, die auf verschiedene Qubits bzw. Spins wirken, dargestellt werden können.

Aufgrund der Beziehung

$$2^N \times 2^N = 2^{2N}$$

ergibt sich, dass die Simulation eines Systems von *N* verrauschten Spins gleichwertig mit der Simulation von doppelt so vielen idealen Spins ist. Dieser zusätzliche Rechenaufwand stellt sowohl für klassische als auch für Quantencomputer eine erhebliche Herausforderung dar. Ziel der hier offenbarten Erfindung ist es, diesen Rechenaufwand zu vermeiden und zu verkleinern bzw. zu minimieren, indem zur Simulation eines verrauschten Spin-Systems das intrinsische Rauschen des verwendeten Quantencomputers genutzt wird.

Diese Aufgabe wird durch ein Verfahren zur Simulation eines realen, insbesondere verrauschten Spin-Systems unter Einsatz eines Quantencomputers gemäß dem geltenden Anspruch 1 gelöst. Vorteilhafte Ausgestaltungen der Erfindung können den abhängigen Ansprüchen entnommen werden.

Erfindungsgemäß handelt es sich um ein Verfahren zur Simulation eines realen, insbesondere eines verrauschten Spin-Systems mittels eines Quantencomputers. Das Verfahren umfasst dabei vier Schritte. Es werden die Dekohränzraten sowie entsprechende Kopplungsoperatoren $L_i$ aller auf einem Quantenchip eines Quantencomputers vorhandenen Qubits bestimmt. Dies erfolgt beispielsweise durch eine Gattertomographie. Darüber hinaus wird das zu simulierende reale Spin-System, z.B. die Kernspins eines Moleküls, in ein quantenmechanisches Modell überführt, auch abstraktes Spin-System oder abstraktes Quanten-Spin-System genannt, welches die zu bestimmenden, physikalisch interessanten bzw. relevanten physikalischen Eigenschaften des zu simulierenden Spin-Systems enthält. Dabei wird wenigstens ein zu bestimmender physikalischer Parameter des realen Spin-Systems auf das abstrakte Quanten-Spin-System abgebildet.

Es wird im Rahmen des Verfahrens der wenigstens eine zu bestimmende physikalische Parameter des abstrakten Quanten-Spin-Systems bestimmt, d. h. der wenigstens eine physikalische Parameter, welcher auf das abstrakte Quanten-Spin-System abgebildet wurde, wird am abstrakten Quanten-Spin-System bzw. auf dem Quantencomputer gemessen und entspricht somit aufgrund der zuvor vorgenommenen Abbildung dem wenigstens einen physikalischen Parameter des realen, insbesondere verrauschten Spin-Systems.

Unter dem realen Spin-System kann unter anderem ein physikalisches Spin-System, wie beispielsweise Kernspins oder Elektronenspins, aber auch Optimierungsprobleme, welche auf Spin-Systeme abgebildet werden können und weitere auf Spin-Systeme abbildbare Systeme, verstanden werden.

Unter dem physikalischen Parameter kann unter anderem ein Korrelator, eine physikalische Größe, ein Parameter, auf den das Optimierungsproblem abgebildet wird, eine Kostenfunktion der Optimierung etc., verstanden werden. Beispielsweise kann der physikalische Parameter ein Korrelator zwischen Spin-Operatoren sein, wobei dies beispielsweise Spin-Operatoren gleicher Gitterplätze bzw. Atome oder auch unterschiedlicher Gitterplätze bzw. Atome sein können. Der Korrelator kann zeitunabhängig oder zeitabhängig sein. Weitere Beispiele für den physikalischen Parameter sind physikalische Größen wie eine Magnetisierung, ein Magnetfeld, eine Wechselwirkung zwischen Spins, etc.. Die Kostenfunktion lässt sich beispielsweise als Energie des abstrakten Spin-Systems abbilden.

Die Erfindung zeichnet sich dadurch aus, dass ein Simulations-Algorithmus für das abstrakte quantenmechanische Modell des zu simulierenden realen Spin-Systems erstellt wird. Dies wird üblicherweise durch eine Form eines Hamilton-Operators mit zusätzlichen Termen zur Beschreibung der Dekoheränzprozesse realisiert. Des Weiteren werden effektive Dekoheränzraten $\Gamma_{dec}$ der Spins des modellierten bzw. abstrakten Quanten-Spin-Systems bestimmt.

Dies geschieht beispielsweise mittels einer Sequenz von Quantengatter-Operatoren, welche die zeitliche Dynamik des abstrakten Modells simulieren. Typischerweise beinhaltet eine solche Sequenz eine Vielzahl von diskreten Schritten, welche wiederum eine bestimmte Anzahl von Quantengatter-Operatoren beinhalten. Ziel dieses Bestimmungsprozesses der effektiven Dekoheränzraten ist die Skalierung der effektiven Dekoheränzraten des realen, insbesondere verrauschten Spin-Systems im Verhältnis zur intrinsischen Dekoheränzrate der Qubits eines Quantencomputers.

Neben den effektiven Dekoheränzraten können auch die zugehörigen effektiven Kopplungsoperatoren $L_i$ bestimmt werden, die beschreiben, wie die abstrakten Spins an die effektiven Dekoheränzraten koppeln. Gemeinsam werden effektive Dekoheränzraten und effektive Kopplungsoperatoren auch als effektives Rauschmodell bezeichnet.

Die effektiven Kopplungsoperatoren beschreiben wie die effektiven Dekoheränzraten an das abstrakte Spin-System koppeln, da sich diese Operatoren, abhängig von der gewählten Quantengatterzerlegung von den Kopplungsoperatoren der Qubits an die externen Freiheitsgrade, unterscheiden können. Insbesondere wird ermittelt, wie die effektiven Kopplungsoperatoren mit den Kopplungsoperatoren der Qubits zusammenhängen. Abhängig von der gewählten Quantengatterzerlegung können die effektiven Kopplungsoperatoren $L_i$ auch auf mehreren abstrakten Spins wirken und einzelne Pauli-Operatoren oder Produkte mehrerer Pauli-Operatoren sein.

Ein Algorithmus zur Simulation der Dynamik kann beispielsweise mittels einer Trotterisierung

$$e^{-iHt} \approx \prod_m^n \prod_k e^{-i\frac{H_k t}{n}}$$

mit $H = \Sigma_k H_k$ realisiert werden. Jeder der Exponentialoperationen auf der rechten Seite beinhaltet wiederum eine bestimmte Anzahl von Quantengatter-Operatoren. Die angewendeten Quantengatter Operatoren sind abhängig von der physikalischen Realisierung der Qubits. Nach Bestimmung der effektiven Dekoheränzraten des abstrakten Quanten-Spin-Systems werden diese mit den zuvor bestimmten Dekoheränzraten der Qubits eines Quantenchips eines Quantencomputers kartiert, wobei unter Kartierung die Zuordnung der simulierten Spins des abstrakten Quanten-Spin-Systems zu den Qubits eines Quantencomputers mit übereinstimmenden effektiven Dekoheränzraten und/oder "Best-Matches" der effektiven Dekoheränzraten mit dem Rauschen des realen Spin-System zu verstehen ist.

Zusätzlich zur Kartierung mittels effektiver Dekoheränzraten können auch die effektiven Kopplungsoperatoren zur Kartierung herangezogen werden. In diesem Fall werden Spins des abstrakten Quanten-Spin-Systems den Qubits eines Quantencomputers zugeordnet, sodass das daraus resultierende effektive Rauschmodell das Rauschen des realen Spin-Systems möglichst gut beschreibt, d.h. Übereinstimmung und/oder "Best-Match".

Nach der Kartierung ist es nun möglich, das reale Spin-System, basierend auf den zuvor durch die abstrakte Simulation und den aus dem Quantencomputer ausgelesenen zugeordneten Dekoheränzraten und/oder der Kopplungs-

operatoren $L_i$, auf einem verrauschten Quantencomputer mittels des Simulations-Algorithmus zu simulieren.

Ein Vorteil dieses Verfahrens ist, dass zum jetzigen Zeitpunkt ein verrauschtes Quantensystem, insbesondere verrauschte Quantencomputer, für Simulationen ungeeignet sind, diese aber mit Hilfe des hier offenbarten Verfahrens zur Simulation von realen, insbesondere verrauschten Spin-Systemen genutzt werden können. Ein weiterer Vorteil ist die Tatsache, dass auf konventionellen Rechenmaschinen derartige verrauschte Spin-Systeme zum jetzigen Zeitpunkt kaum bzw. nur schlecht simuliert werden können.

Um die Zeit, die der Quantenchip bei der Ausführung eines diskreten Schrittes beansprucht, zu bestimmen, ist es notwendig, die Anzahl der Quantengatter-Operationen innerhalb des diskreten Schrittes zu zählen, da diese zusammengenommen jeweils einem einzelnen Zeitentwicklungsschritt entsprechen. Die benötigte Zeit Wiederum bestimmt das Rauschen, das während eines solchen Schrittes auf einem Quantencomputer auftritt. Daher sieht das Verfahren in einer vorteilhaften Ausgestaltung vor, dass die simulierte effektive Dekoheränzrate eines diskreten Schrittes bestehend aus einer Abfolge von $N$ Quantengatter-Operationen durch die Gleichung

$$\Gamma_{dec} = \frac{1}{t_{sim}} \sum_{i=1}^{N} \tau_i^g \, \Gamma_i^g$$

beschrieben werden kann, wobei $\tau_i^g$ die Quantengatter-Zeiten, $\Gamma_i^g$ die Qubit-Dekoheränzraten während des Quantengatters und $t_{sim}$ die simulierte Zeitdauer eines solche Zeitentwicklungsschrittes sind. Für den Fall, dass die effektiven Dekoheränzraten von einem Qubit zum nächsten Variieren, gilt für jedes einzelne Qubit eine separate Version der obigen Gleichung. Sollten einige Quantengatter-Operationen parallel ausgeführt werden können, so kann die effektive Anzahl der Quantengatter-Operationen verringert werden, wodurch die simulierte effektive Dekohärenz verringert wird. Erhöht werden kann die effektive Dekoheränzrate schlicht durch einfaches Anwenden eines trivialen Quantengatters, also dem Verstreichen von Zeit, ohne, dass eine Quantengatter-Operation tatsächlich angewendet wird.

Zusätzlich werden in einer vorteilhaften Ausführung des Verfahrens die effektiven Kopplungsoperatoren $L_i$ bestimmt. Jedes Qubit koppelt mit bestimmten Kopplungsoperatoren $L^{q_i}$ an die Umgebung, welche durch Pauli-Operatoren ausgedrückt werden können. Diese Kopplung kann von der echten Kopplung eines Spin-Systems abweichen. Durch Rotation der Basis, umfassend die Zustände ,Spin-Up' und ,Spin-Down', kann in einer weiteren vorteilhaften Ausgestaltung des Verfahrens ein Zusammenhang zwischen dem effektiven $L_i$ und dem Kopplungsoperator $L^{q_i}$ der Qubits erzeugt werden. Dabei sollte beachtet werden, dass große Rotationen die als Teil der Quantengatter-Operationen verwendet werden, zu effektiven Transformationen von $L^{q_i}$ führen.

In einer weiteren vorteilhaften Ausführung des Verfahrens werden die effektiven Kopplungsoperatoren durch Durchtauschen bestimmt. Unter Durchtauschen wird hierbei ein Vertauschen von Superoperatoren wie dies im Folgenden beispielhaft beschrieben ist, verstanden. Eine Sequenz von Quantengattern mit Dekoheränz die einen diskreten Zeitschritt implementieren, kann mittels einer Sequenz von Superoperatoren wie folgt dargestellt werden:

$$G = e^{\mathcal{L}_1} e^{\mathcal{L}_{D_1}} e^{\mathcal{L}_1} e^{\mathcal{L}_{D_1}} \cdots e^{\mathcal{L}_N} e^{\mathcal{L}_{D_N}}$$

Hier sind die $\mathcal{L}_i$ die Lindblad-Superoperatoren, die das Gatter ohne Dekoheränz beschreiben, sogenannte Gatter-Superoperatoren, und die $\mathcal{L}_{D_i}$ die Lindblad-Superoperatoren, die die Dekoheränz während des entsprechenden Gatters beschreiben, sogenannte Dekoheränz-Superoperatoren. Um das effektive Rauschen zu bestimmen, werden die Dekoheränz-Superoperatoren nach rechts oder links durchgetauscht und zusammengefasst. Da es sich um Operatoren handelt, führt jedes Vertauschen eines Dekoheränz-Superoperators mit einem Gatter-Superoperator zu einer Transformation des Gatter-Superoperators. Die Wirkung eines Gatter-Superoperators wird beschrieben durch

$$e^{\mathcal{L}_i} A = U_i A U_i^{\dagger}$$

wobei $U_i$ eine unitäre Matrix ist. Wird ein Dekoheränz-Superoperator an einem solchen Gatter vorbeigetauscht, ändern sich die entsprechenden Kopplungsoperatoren gemäß

$$L_{D_i} \rightarrow U_j L_{D_i} U_j^{\dagger}$$

Damit lassen sich die effektiven Kopplungsoperatoren einer Sequenz von Gatteroperationen bestimmen.

In einer abermals vorteilhaften Ausführung des Verfahrens werden Gatteroperationen genutzt, um mittels der Transformationen $U_i$ weitere effektive Kopplungsoperatoren herzustellen, die dazu verwendet werden können, das reale System zu beschreiben oder bestimmte Effekte, z.B. einen gewissen Gleichgewichtszustand des abstrakten Spin-Systems, zu erreichen, die aber nicht nativ bei den Qubits auftreten. Dazu können auch zusätzliche Gatteroperationen eingeführt werden.

Beispielsweise kann ein Gleichgewichtszustand bei unendlicher Temperatur erreicht werden, indem die Kopplungsoperatoren randomisiert werden indem die Basis mehrmals in verschiedene Richtungen gedreht wird.

Da es keine eindeutige Lösung gibt, wie Spins und Qubits einander zugeordnet werden, wird in einer weiteren vorteilhaften Ausführung eine Wahl getroffen, welche diese sogenannte Kartierung optimiert. Das Verfahren sieht vor, dass das Optimierungsproblem derart formuliert wird, dass die effektive Dekoheränzrate $\Gamma_{dec}(M)$ eine Funktion der Kartierung M ist und eine gewünschte Ziel-Dekoheränzrate, beispielsweise die des realen Systems, optimal darstellt:

$$M_{opt} = \underset{M}{\mathrm{argmin}}(|\Gamma_{dec}(M) - \Gamma_{ziel}|)$$

Anstelle einer gewünschten Rate kann das Problem auch umformuliert werden, sodass eine möglichst geringe effektive Rate resultiert:

$$M_{opt} = \underset{M}{\mathrm{argmin}}(\Gamma_{dec}(M))$$

Bei physischen Implementierungen von Quantencomputern ist die Konnektivität der Qubits häufig eingeschränkt, sodass beispielsweise nur benachbarte Qubits in einer zwei-dimensionalen Anordnung miteinander interagieren können. Dies wird auch Interaktion genannt und kann beim Kartierungsvorgang berücksichtigt werden. Aus dieser zwei-dimensionalen Anordnung lassen sich immer lineare Ketten von Qubits zusammenfassen, bei denen jeweils nächste Nachbarn miteinander interagieren können, auch Interaktionskette genannt.

In einer weiteren vorteilhaften Ausgestaltung wird beim Simulations-Algorithmus des abstrakten Quanten-Spin-Systems wenigstens eine Interaktion, insbesondere eine Interaktionskette, zwischen benachbarten Qubits berücksichtigt. Dies deshalb, da der Algorithmus auf einer Vielzahl von Qubits, die die Spins des realen Spin-Systems repräsentieren, ausgeführt wird und es durch die Interaktion der Qubits zu einem Rauschen zwischen den Quantengatter-Operationen kommt, mit der die effektive Dekoheränzrate simuliert werden kann. Die Interaktion kann mittels Tauschoperationen (SWAP) zwischen Qubits künstlich erweitert werden, um auch komplexere abstrakte Systeme darzustellen. Durch diese Tauschoperationen wird das effektive Rauschmodell weiter modifiziert. Für eine Interaktionskette lassen sich mittels sogenannter Tauschnetzwerke (SWAP network) effiziente Simulationsalgorithmen definieren.

Da es keine eindeutige Lösung gibt, in welcher Position sich eine Interaktionskette zwischen Qubits eines Quantencomputers befindet, muss eine Wahl getroffen werden, welche Interaktionsketten der Qubits verwendet werden sollen. Um diese sogenannte Kartierung zu optimieren, sieht das Verfahren vor, dass dieses Optimierungsproblem derart formuliert wird, dass die effektive Dekoheränzrate eine Funktion der Kartierung ist:

$$\Gamma_{dec}(M_{opt}) = \underset{M}{\min}\,\Gamma_{dec}(M)$$

Anschließend wird die Erfindung anhand eines Ausführungsbeispiels näher erläutert.
Es zeigt:

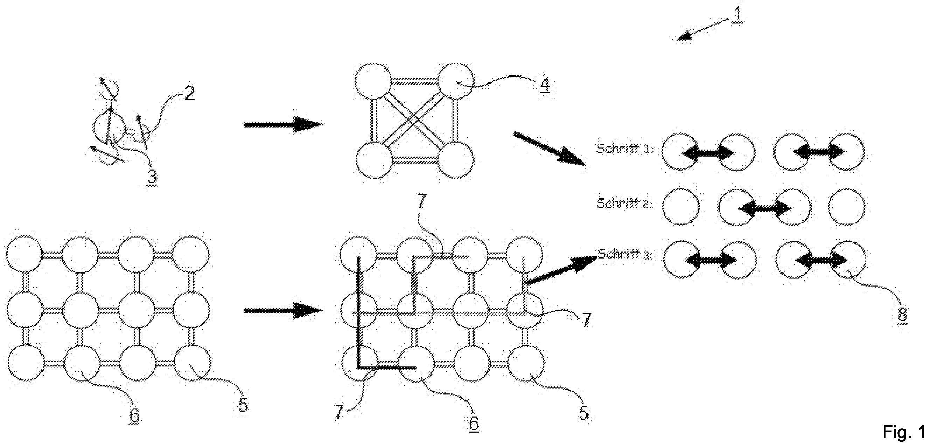

Fig. 1    einen schematischen Ablauf eines Ausführungsbeispiels des Verfahrens zur Simulation eines realen, insbesondere verrauschten Spin-Systems mittels eine Quantencomputers.

Figur 1 zeigt einen schematischen Ablauf eines Ausführungsbeispiels des Verfahrens 1 zur Simulation 8 eines verrauschten realen Spin-Systems 3 mittels eines Quantencomputers 6, dass zwei parallel ablaufende Arbeitsabläufe beinhaltet. Zum einen die Konvertierung des zu simulierenden Spin-Systems 3 in ein abstraktes Quanten-Spin-System 4. Zum anderen die Erfassung aller möglichen Qubits 5 und deren Dekoheränzraten eines Quantencomputers 6. Zunächst wird das reale Spin-System 3 auf ein Modell abgebildet, welches mittels eines Spin-Hamilton-Operators beschrieben wird. Dieser Spin-Hamilton-Operator beinhaltet dabei ebenfalls Terme, die die Dekoheränz der Spins 2 beschreibt. Des Weiteren werden alle möglichen Interaktionsketten 7, die die Simulation 8 eines realen Systems mit einer bestimmten Anzahl von Qubits 5 ermöglichen, auf den Quantencomputer 6 abgebildet.

Jeder dieser Interaktionsketten 7 wird ein bestimmtes Rauschprofil durch die jeweiligen Dekoheränzraten für die Simulation 8 erzeugen. Anschließend findet die Kartierung statt, also das Auswählen der geeignetsten Interaktionskette 7 mit den geeignetsten Dekoheränzraten, um die optimale Annäherung des abstrakten Quanten-Spin-Systems 4 und der Simulation 8 zu erzeugen.

Somit ist vorstehend ein Verfahren offenbart, mit dem ein reales, insbesondere verrauschtes Spin-System mittels eine Quantencomputers simuliert wird und dabei ein hoher Rechenaufwand vermieden bzw. minimiert wird, da zur Simulation das intrinsische Rauschen der Qubits eines Quantencomputers genutzt wird.

**BEZUGSZEICHENLISTE**

1    Verfahren
2    Spin
3    Spin-System
4    Abstraktes Spin-System
5    Qubit
6    Quantencomputer
7    Interaktionskette
8    Simulation

**Patentansprüche**

1. Verfahren (1) zur Simulation eines realen, insbesondere verrauschten Spin-Systems (3) mittels eines Quantencomputers (6), wobei ein reales, insbesondere verrauschtes Spin-System (3) auf ein abstraktes Quanten-Spin-System (4) und wenigstens ein zu bestimmender physikalischer Parameter auf das abstrakte Quanten-Spin-System (4) abgebildet wird,
**dadurch gekennzeichnet, dass** in zwei parallel ablaufenden Arbeitsabläufen einmal ein Simulations-Algorithmus für das abstrakte Quanten-Spin-System (4) erstellt und die effektiven Dekohärenzraten der Spins (2) des abstrakten Quanten-Spin-Systems (4) bestimmt werden, und parallel die Dekohärenzraten sowie die Kopplungsoperatoren aller verfügbaren Qubits (5) des Quantencomputers (6) erfasst werden, um im nächsten Schritt eine Kartierung der effektiven Dekohärenzraten der Spins (2) des abstrakten Quanten-Spin-Systems (4) mit den dazugehörigen Dekohärenzraten der Qubits (5) des Quantencomputers (6) zu erzeugen, wobei beim Kartieren die simulierten Spins des abstrakten Quanten-Spin-Systems (4) zu den Qubits (5) des Quantencomputers (6) mit übereinstimmenden effektiven Dekohärenzraten und/oder "Best-Matches" der effektiven Dekohärenzraten mit dem Rauschen des realen Spin-Systems (3) zugeordnet werden, womit anschließend das abstrakte Quanten-Spin-System (4) auf dem Quantencomputer (6) simuliert und der wenigstens eine zu bestimmende physikalische Parameter des abstrakten Quanten-Spin-Systems (4) bestimmt wird.

2. Verfahren gemäß Anspruch 1, **dadurch gekennzeichnet, dass** die zu den effektiven Dekohärenzraten zugehörigen effektiven Kopplungsoperatoren bestimmt werden, die durch die Anwendung diskreter Gatteroperationen auf den Qubits (5) des Quantencomputers (6) aus den Kopplungsoperatoren der Qubits (5) erzeugt werden.

3. Verfahren gemäß Anspruch 2, **dadurch gekennzeichnet, dass** Dekohärenz-Superoperatoren definiert werden, welche die Kopplungsoperatoren der Qubits (5) umfassen und ein Durchtauschen der Dekohärenz-Superoperatoren genutzt wird, um die effektiven Kopplungsoperatoren zu bestimmen.

4. Verfahren gemäß einem der vorhergehenden Ansprüche, **dadurch gekennzeichnet, dass** die effektiven Kopplungsoperatoren durch Anwendung von Gatteroperationen auf den Qubits (5) des Quantencomputers (6) transformiert werden.

5. Verfahren gemäß Anspruch 4, **dadurch gekennzeichnet, dass** zum Transformieren Rotationen der Qubit-Basis genutzt werden.

6. Verfahren gemäß Anspruch 4 oder 5, **dadurch gekennzeichnet, dass** ein bestimmter Gleichgewichtszustand des abstrakten Quanten-Spin-Systems (4) erreicht wird.

7. Verfahren gemäß einem der vorhergehenden Ansprüche, **dadurch gekennzeichnet, dass** beim Simulations-Algorithmus des abstrakten Quanten-Spins-Systems (4) wenigstens eine Interaktion, insbesondere eine Interaktionskette (7), zwischen benachbarten Qubits (5) und/oder Quantengattern berücksichtigt wird.

8. Verfahren gemäß einem der vorhergehenden Ansprüche, **dadurch gekennzeichnet, dass** zur Optimierung der Kartierung der effektiven Dekohärenzraten mit den Dekohärenzraten der Qubits (5) eines Quantencomputers (6) die effektive Dekohärenzrate $\Gamma_{dec}$ eine Funktion der Kartierung M gemäß $\Gamma_{dec}\left(M_{opt}\right) = \min_{M} \Gamma_{dec}(M)$ ist.

9. Verfahren gemäß einem der vorhergehenden Ansprüche, **dadurch gekennzeichnet, dass** zur Optimierung der Kartierung der effektiven Dekohärenzraten mit den Dekohärenzraten der Qubits (5) eines Quantencomputers (6) die effektive Dekohärenzrate $\Gamma_{dec}(M_{opt})$ eine Funktion der Kartierung M gemäß $M_{opt} = \underset{M}{\arg\min} \left| \Gamma_{dec}(M) - \Gamma_{ziel} \right|$ ist, wobei $\Gamma_{ziel}$ die Ziel-Dekohärenzrate ist.

**Claims**

1. Method (1) for simulating a real spin system (3), in particular a noisy spin system, by means of a quantum computer (6), a real spin system (3), in particular a noisy spin system, being mapped on an abstract quantum spin system (4) and at least one physical parameter to be determined being mapped on the abstract quantum spin system (4), **characterized in that** in two parallel workflows, a simulation algorithm for the abstract quantum spin system (4) is created and the effective decoherence rates of the spins (2) of the abstract quantum spin system (4) are determined, and the decoherence rates and the coupling operators of all available qubits (5) of the quantum computer (6) are recorded in parallel in order to generate mapping of the effective decoherence rates of the spins (2) of the abstract quantum spin system (4) with the associated decoherence rates of the qubits (5) of the quantum computer (6) in the next step, the simulated spins of the abstract quantum spin system (4) being assigned to the qubits (5) of the quantum computer (6) with matching effective decoherence rates and/or "best matches" of the effective decoherence rates with the noise of the real spin system (3) during the mapping, as a result of which the abstract quantum spin system (4) is subsequently simulated on the quantum computer (6) and the at least one physical parameter of the abstract quantum spin system (4) to be determined is determined.

2. Method according to claim 1, **characterized in that** the effective coupling operators are determined, which are associated with the effective decoherence rates and are generated from the coupling operators of the qubits (5) by the application of discrete gate operations on the qubits (5) of the quantum computer (6).

3. Method according to claim 2, **characterized in that** decoherence superoperators are definedm, which comprise the coupling operators of the qubits (5) and an exchange of the decoherence superoperators is used to determine the effective coupling operators.

4. Method according to any of the preceding claims, **characterized in that** the effective coupling operators are transformed by the application of gate operations on the qubits (5) of the quantum computer (6).

5. Method according to claim 4, **characterized in that** rotations of the qubit basis are used for the transformation.

6. Method according to claim 4 or 5, **characterized in that** a certain state of equilibrium of the abstract quantum spin system (4) is reached.

7. Method according to any of the preceding claims, **characterized in that** at least one interaction, in particular an interaction chain (7), between adjacent qubits (5) and/or quantum gates is taken into account in the simulation algorithm of the abstract quantum spin system (4).

8. Method according to any of the preceding claims, **characterized in that** to optimize the mapping of the effective decoherence rates with the decoherence rates of the qubits (5) of a quantum computer (6), the effective decoherence rate $\Gamma_{dec}$ is a function of the mapping M according to

$$\Gamma_{dec}\left(M_{opt}\right) = \underset{M}{min} \; \Gamma_{dec}\left(M\right).$$

9. Method according to any of the preceding claims, **characterized in that** to optimize the mapping of the effective decoherence rates with the decoherence rates of the qubits (5) of a quantum computer (6), the effective decoherence rate $\Gamma_{dec}$ $(M_{opt})$ is a function of the mapping M according to $M_{opt} = \underset{M}{\arg\min} |\Gamma_{dec}(M) - \Gamma_{dec}|$ , where $\Gamma_{target}$ is the target decoherence rate.

## Revendications

1. Procédé (1) pour la simulation d'un système de spins réel (3), en particulier bruité, au moyen d'un ordinateur quantique (6), dans lequel un système de spins réel (3), en particulier bruité, est reproduit sur un système de spins quantiques abstrait (4) et au moins un paramètre physique à déterminer est reproduit sur le système de spins quantiques abstrait (4),
**caractérisé en ce que,** dans deux processus de travail se déroulant en parallèle, un algorithme de simulation pour le système de spins quantiques abstrait (4) est créé une fois et les taux de décohérence effectifs des spins (2) du système de spins quantiques abstrait (4) sont déterminés, et, en parallèle, les taux de décohérence ainsi que les opérateurs de couplage de tous les qubits (5) disponibles de l'ordinateur quantique (6) sont détectés, afin de générer dans l'étape suivante une cartographie des taux de décohérence effectifs des spins (2) du système de spins quantiques abstrait (4) avec les taux de décohérence correspondants des qubits (5) de l'ordinateur quantique (6), dans lequel, lors de la cartographie, les spins simulés du système de spins quantiques abstrait (4) sont associés aux qubits (5) de l'ordinateur quantique (6) avec des taux de décohérence effectifs concordants et/ou des « meilleures correspondances » des taux de décohérence effectifs avec le bruit du système de spins réel (3), moyennant quoi le système de spins quantiques abstrait (4) simule ensuite sur l'ordinateur quantique (6) et l'au moins un paramètre physique à déterminer du système de spins quantiques abstrait (4) est déterminé.

2. Procédé selon la revendication 1, **caractérisé en ce que** les opérateurs de couplage effectifs associés aux taux de décohérence effectifs sont déterminés, lesquels opérateurs de couplage sont générés par l'application d'opérations de portes discrètes sur les qubits (5) de l'ordinateur quantique (6) à partir des opérateurs de couplage des qubits (5).

3. Procédé selon la revendication 2, **caractérisé en ce que** des superopérateurs de décohérence sont définis, lesquels comprennent les opérateurs de couplage des qubits (5) et une permutation des superopérateurs de décohérence est utilisée afin de déterminer les opérateurs de couplage effectifs.

4. Procédé selon l'une des revendications précédentes,
**caractérisé en ce que** les opérateurs de couplage effectifs sont transformés par l'application d'opérations de portes sur les qubits (5) de l'ordinateur quantique (6).

5. Procédé selon la revendication 4, **caractérisé en ce que** des rotations de la base des qubits sont utilisées pour la transformation.

6. Procédé selon la revendication 4 ou 5, **caractérisé en ce qu'**un état d'équilibre déterminé du système de spins quantiques abstrait (4) est atteint.

7. Procédé selon l'une des revendications précédentes,
**caractérisé en ce que** l'algorithme de simulation du système de spins quantiques abstrait (4) prend en compte au moins une interaction, en particulier une chaîne d'interactions (7), entre des qubits (5) et/ou des portes quantiques voisins.

8. Procédé selon l'une des revendications précédentes, **caractérisé en ce que,** pour l'optimisation de la cartographie des taux de décohérence effectifs avec les taux de décohérence des qubits (5) d'un ordinateur quantique (6), le taux de décohérence effectif $\Gamma_{déc}$ est une fonction de la cartographie M selon $\Gamma_{déc}(M_{opt}) = \underset{M}{\min}\, \Gamma_{déc}(M)$ .

9. Procédé selon l'une des revendications précédentes, **caractérisé en ce que,** pour l'optimisation de la cartographie des taux de décohérence effectifs avec les taux de décohérence des qubits (5) d'un ordinateur quantique (6), le taux de décohérence effectif $\Gamma_{déc}$ $(M_{opt})$ est une fonction de la cartographie M selon

$$M_{opt} = \underset{M}{\mathrm{argmin}} \, |\Gamma_{déc}(M) - \Gamma_{cible}|$$

, où $\Gamma_{cible}$ représente le taux de décohérence cible.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019109816 A1

- US 20200320240 A1

**In der Beschreibung aufgeführte Nicht-Patentliteratur**

- **GEORGESCU, IULIA M.** ; **SAHEL ASHHAB** ; **FRANCO NORI**. Quantum simulation.. *Reviews of Modern Physics*, 2014, vol. 86 (1), 153

- **KIM, KIHWAN et al.** Quantum simulation of frustrated Ising spins with trapped ions.. *Nature*, 2010, vol. 465 (7298), 590-593